# EUROPEAN PATENT SPECIFICATION

(11) **EP 4 099 240 B1**
(45) Date of publication and mention of the grant of the patent: **18.11.2026**
(21) Application number: 21176927.8
(22) Date of filing: 31.05.2021
(51) Int. Cl.: G06Q 10/06, G06Q 50/08

(54) **SYSTEM AND METHOD FOR BUILDING DATA EXCHANGE**
SYSTEM UND VERFAHREN FÜR GEBÄUDEDATENAUSTAUSCH
SYSTÈME ET PROCÉDÉ DE CONSTRUCTION D'ÉCHANGE DE DONNÉES

(43) Date of publication of application: 07.12.2022
(73) Proprietor: ABB Schweiz AG, 5400 Baden (CH)
(72) Inventor: ALEKSY, Markus, 67065 Ludwigshafen (DE); BORRISON, Reuben, 68775 Ketsch (DE); BERNING, Matthias, 67549 Worms (DE); BAUER, Philipp, 69469 Weinheim (DE); ACKERMANN, Patric, 64405 Fischbachtal (DE); FINSTER, Soeren, 76131 Karlsruhe (DE)
(74) Representative: Maiwald GmbH

(56) References cited:
- US-A1- 2020 387 576
- WIKIPEDIA: "Digital project twin", INTERNET ARTICLE, 28 May 2021 (2021-05-28), XP055851196, Retrieved from the Internet <URL:https://en.wikipedia.org/w/index.php?title=Digital_project_twin&oldid=1025591400> [retrieved on 20211014]

## Description

### FIELD OF THE INVENTION

The invention relates to the field of building management, in particular to building management of industrial buildings. Building management thereby relates to all phases in the lifecycle of buildings, such as design, construction, commissioning, operation & maintenance and/or disposal/destruction.

### BACKGROUND OF THE INVENTION

In building management, different concepts of building description are known. In particular, a Building Information Modelling, BIM), is the most common approach for the design, construction and maintenance of buildings. It improves information flow between different stakeholders involved at various stages of building creation and in some countries, the introduction of the BIM and BIM methods is already quite advanced and supported by various software tools. On the other hand, Digital twin, DT, is a central concept of Industry 4.0. use cases. In particular, it contains three main parts: physical products in real space, virtual products in virtual space, and the connections of data and information that ties the virtual and real products together. Both concepts are implemented using different software applications and tools, thus requiring labor-intensive and error-prone handling of information between them. Wikipedia: "Digital project twin" describes the digital project twin as a virtual equivalent of intangible assets and processors by using digits, particularly binary digits, around a temporary undertaking.

US 2020/387576 A1 also discloses a computer implemented system / method for data integration between BIM models and digital twin models.

### DESCRIPTION OF THE INVENTION

It is therefore an objective of the invention to provide a system that allows an improved data exchange between BIM instances and DT instances. This objective is achieved by the subject-matter of the independent claims. Further preferred embodiments are evident from the dependent patent claims.

According to an aspect of the invention, a computer-implemented system for building data exchange, comprises the following: An information modelling unit, comprising a description of a digital twin, DT, model, a BIM, building information modelling, model and relations between the DT model and the BIM model, wherein the information modelling unit is configured to provide modelling data comprising information of the DT model, the BIM model and/or relations between the DT model and the BIM model. A BIM extractor, being configured to determine extraction BIM data from a BIM instance of the BIM model of the building using the modelling data. A DT extractor, being configured to determine extraction DT data from a DT instance of the DT model of the building using the modelling data. A natural language processing, NLP, unit, comprising a machine learning model that is trained on a model database to detect, contextualize and categorize entity names and/or values. The NLP unit is configured to extract additional BIM data from the BIM model nd/or additional DT data from the DT model. At least one converter engine, being configured to convert the extraction DT data and the additional DT data into converted DT data using the modelling data and being configured to convert the extraction BIM data and the additional BIM data into converted BIM data using the modelling data. A BIM compositor, being configured to populate the converted DT data into a converted BIM instance using the modelling data. A DT compositor, being configured to populate the converted BIM data into a converted DT instance using the modelling data.

Preferably, the information modelling unit comprises a description of at least one DT model and at least one BIM model. The information modelling unit fur preferably comprises a plurality of DP models and/or a plurality of BIM models, for example meta-models and/or ontologies.

Both the DT model and the BIM model provide digital representations of physical entities that can be used to address various use cases, in particular planning or controlling entities of the building. Moreover, the included models can be used for different types of simulations. For example, BIM models can be used as input for various simulation and analysis tools, including structural analysis, energy performance simulation, daylight analysis, computational fluid dynamics, etc. This is also true for DT models. A DT model may contain a variety of computational and presentational models regarding its real-world entity including natural laws, statistical data, machine learning / artificial intelligence, geometrical and material models and visualization-oriented approaches.

Preferably, the information modelling unit includes a meta-model for DTs describing the required internal models, mechanisms to structure and modularize the content of DTs and BIMs, mechanisms to map existing information to standards, mechanisms to model relations inside the DT and BIM as well as various kinds of corresponding assemblies.

Preferably, the DT compositor is configured to utilize information that is included in the information modelling unit, in particular the modelling data, and is configured to populate BIM information and data, in particular the converted BIM data, into discrete DT instances, in particular a converted DT instance. Preferably, a discrete DT is a single entity that provides value without needing to be broken down further. Moreover, the DT compositor is configured to assemble discrete DTs creating a composite DT that combines multiple discrete DTs.

Preferably, the DT extractor is configured to extract information, in particular the extraction DT data, from DT instances utilizing information, in particular the modelling data that is included in the information modelling unit.

Preferably, the BIM compositor is configured to utilize information, in particular the modelling data, that is included in the information modelling unit and is configured to populate DT information and data, in particular the converted DT data, into BIM instances, in particular the converted BIM instance.

Preferably, the BIM extractor is configured to extract information from BIM instances utilizing information, in particular the modelling data that is included in the information modelling unit.

Preferably, the one or more converter engines are configured to utilize information, in particular the modelling data that is included in the information modelling unit, information of the BIM extractor and the DT compositor to convert information and data from a BIM instance into a DT instance. Moreover, it utilizes information, in particular modelling data that is included in the information modelling unit, information of the DT extractor and BIM compositor to convert information and data from a DT instance into a BIM instance. Further preferably, the converter engine is configured to request the modelling data from the information modelling unit that the converter engine need for its conversion process.

In particular, the converter engine analyzes the information models used to describe a BIM instance and/or a DT instance, identifies corresponding concepts in meta-models, ontologies etc. used to describe BIMs and/or DTs, parts of them and relationships between them and maps them to the counterpart, in parituclar based on rules and/or restrictions.

For example, if the converter engine identifies a composite DT, or in other words a DT that is a combination of discrete DTs that represent entities comprising multiple individual components, it analyzes which models, in particular meta-models, ontologies etc, are required to analyze the included discrete DTs and uses the concepts identified in these models to find appropriate models, in particular meta-models, ontologies etc., that are used to describe similar concepts in BIM. Afterwards, the identified concepts and in particular their relationships are mapped to their counterparts using rules and/or restrictions.

Thus, an interoperability and information exchange between systems and software applications of the building is improved. Furthermore, uniform access to data and information is provided. Thus, a reuse of existing tools and interfaces is provided. The system also allows avoiding or reducing labour-intensive and error-prone manual handling of information between BIM models and DT models.

Preferably, the NLP unit is configured to extract the additional data from a data field of the respective BIM model or DT model, in particular data that is relevant to other data fields. For example, a BIM model comprises a name data field containing a name of a temperature sensor. The name data field is used to define a type of entity. In this example, the name of the temperature sensor is "temp_sens_45x_control_room". The converter engine would interpret the name data field of the BIM model as an entity type temperature sensor and use this information for its conversion. The NLP unit is configured to further analyse the name data field for additional data. In this case, the NLP unit extract the additional data "control_room" and provides the additional information that the temperature sensor is most likely in the location control room although there might not be such information in a corresponding data field in the BIM model.

The boundary condition of NLP is on the different variety of data it has been trained on. Therefore, for unknown/erroneous entities continuous learning approaches such as active learning can be applied to update the model continuously. This way the model can continuously learn and update itself.

Preferably, the NLP unit comprises a machine learning model that is trained on a model database, in particular to detect, contextualize and categorize entity names and/or values.

Thus, the NLP unit allows to provide additional data about the BIM model or the DT model that might not have been available by the analysis of the conversion engine.

In a preferred embodiment of the invention, wherein the converter engine is configured to model the relations between the DT model and the BIM model using the modelling data, wherein modelling the relations between the DT model and the BIM model comprise analysing the DT model and the BIM model and thereby determining a conversion method for converting at least part of the DT model into the BIM model and vice versa.

In a preferred embodiment of the invention, analysing the DT model and the BIM model comprises restructuring data of one of the DT model and the BIM model
In other words, unstructured information from the DT model or the BIM model is obtained and structured by the converter engine. For example, the converter engine obtains locations of temperature and pressure sensors from a BIM model by requesting the corresponding modelling data and converts the received modelling data into a 2D temperature and pressure sensor map of the DT model. In other words, the converter engine determined a conversion method that allows interchanging information and data from the DT model and the BIM model even when the respective model normally does not contain this information.

In a preferred embodiment of the invention, determining the conversion method comprises selecting a predetermined standard conversion method.

In other words, the conversion method comprises a direct mapping between data of the respective DT model or BIM model. For example, such a standard conversion method comprises a conversion between degree Celsius and degree Fahrenheit.

In a preferred embodiment of the invention, determining the conversion method comprises generating a modelling logic estimating a conversion between the DT model and the BIM model.

Preferably, the converter engine determines that no direct conversion between data of the DT model and the BIM model is possible. Thus, the converter engine is configured to automatically determine an approximated conversion that converts as much data as possible from one model instance into the other model instance.

Thus, the converter engine allows to automatically converting data from one model instance into the other model instance without the need of control of a user.

In a preferred embodiment of the invention, the information modelling unit uses a unified modelling language, UML, XML schemes, meta-models and/or ontologies to describes the DT, model, the BIM model, and/or the relations between the DT model and the BIM model.

In a preferred embodiment of the invention, the at least one converter engine is configured to identify errors in the provided extraction DT data and/or the provided extraction BIM data.

In a preferred embodiment of the invention, the identified error comprises wrong data or missing data in the provided extraction DT data and/or the provided extraction BIM data.

Preferably, the NLP unit is able to extract the wrong data or the missing data as additional data from other data fields of the respective model.

In a preferred embodiment of the invention, the converter engine is configured to provide a suggestion to the identified error in the provided extraction DT data and/or the provided extraction BIM data using a knowledge database.

The knowledge database preferably contains different meta-models and ontologies that are used to describe and analyze the relations between different concepts of a building or concepts related to a building. Additionally, it can contain rules, restrictions, axioms etc. that are used to perform conversions.

The NLP unit allows supporting the user with automated classification of text to its property thereby accelerating the process of labelling the data of the data fields. In other words, the user does not have to determine by himself which type of additional data has been extracted by the NLP unit, but the NLP unit already provides a suggestion that only has to be confirmed by the user.

For example, the knowledge database comprises a knowledge graph. It may also comprise one or more knowledge graph.

In a preferred embodiment of the invention, the provided extraction DT data and/or the provided extraction BIM data comprise a plurality of different data fields, wherein the NLP unit is configured to provide the suggestion to the identified error in a data field using data from another data field.

In a preferred embodiment of the invention, the NLP unit is configured to, when the converter engine identifies an error in the provided extraction DT data and/or the provided extraction BIM data, guide a user to correct the identified error.

In a preferred embodiment of the invention, the NLP unit is configured to provide a visualization of the identified error for the user.

According to another aspect of the invention, a computer-implemented method for building data exchange comprises the following steps: Determining, by a building information modelling, BIM, extractor, extraction BIM data from a BIM instance of a BIM model of the building using modelling data of an information modelling unit, comprising a description of a digital twin, DT, model, a BIM model and relations between the DT model and the BIM model wherein the information modelling unit is configured to provide modelling data comprising information of the DT model, the BIM model and/or relations between the DT model and the BIM model. Extracting, by a natural language processing unit comprising a machine learning model that is trained on a model database to detect, contextualize and categorize entity names and/or values, additional BIM data from the BIM model. Converting, by a converter engine, the extraction BIM data and the additional BIM data into converted BIM data using the modelling data. Populating, by a DT compositor, the converted BIM data into a converted DT instance using the modelling data.

According to another aspect of the invention, a computer-implemented method for building data exchange comprises the following steps: Determining, by a digital twin, DT, extractor, extraction DT data from a DT instance of a DT model of the building using the modelling data of an information modelling unit, comprising a description of the DT model, a BIM, building information modelling, model and relations between the DT model and the BIM model, wherein the information modelling unit is configured to provide modelling data comprising information of the DT model, the BIM model and/or relations between the DT model and the BIM model. Extracting, by a natural language processing unit comprising a machine learning model that is trained on a model database to detect, contextualize and categorize entity names and/or values, additional DT data from the DT model. Converting, by a converter engine, the extraction DT data and the additional DT data into converted DT data using the modelling data. Populating, by a BIM compositor, the converted DT data into a converted BIM instance using the modelling data.

In a preferred embodiment, a computer program comprises instructions which, when the program is executed by a computer, cause the computer to carry out the methods, as described herein.

### BRIEF DESCRIPTION OF THE DRAWINGS

The subject matter of the invention will be explained in more detail in the following text with reference to preferred exemplary embodiments, which are illustrated in the attached drawings, in which:
- Fig.1: schematically shows a system for building data exchange;
- Fig.2: schematically shows a method for building data exchange;
- Fig.3: schematically shows another method for building data exchange; and
- Fig.4: schematically shows another method for building data exchange.

The reference symbols used in the drawings, and their meanings, are listed in summary form in the list of reference symbols. In principle, identical parts are provided with the same reference symbols in the figures.

### DETAILED DESCRIPTION OF PREFERRED EMBODIMENTS

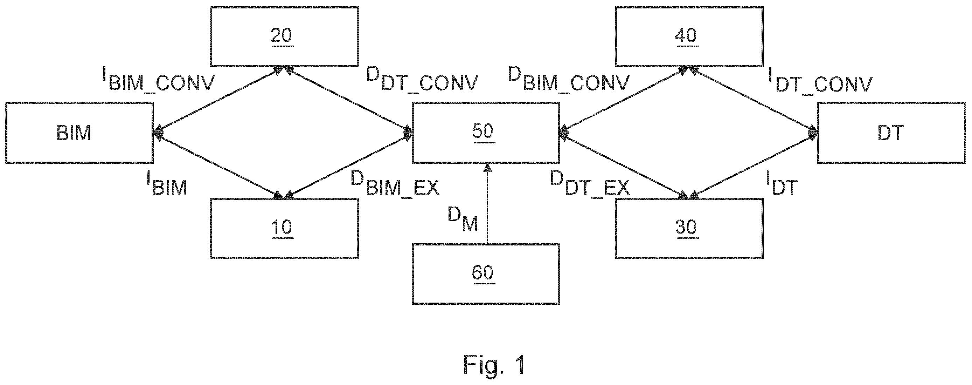

Fig.1 schematically shows a system for building data exchange. The system comprises an information modelling unit 60, comprising a description of a digital twin, DT, model M_{DT}, a BIM, building information modelling, model M_{BIM} and relations between the DT model M_{DT} and the BIM model M_{BIM}, wherein the information modelling unit 60 is configured to provide modelling data D_{M} comprising information of the DT model M_{DT}, the BIM model M_{BIM} and/or relations between the DT model M_{DT} and the BIM model M_{BIM}. The system further comprises a BIM extractor 10, being configured to determine extraction BIM data D_{BIM_EX} from a BIM instance I_{BIM} of the BIM model M_{BIM} of the building using the modelling data D_{M}. The system comprises a DT extractor 30, being configured to determine extraction DT data D_{DT_EX} from a DT instance I_{DT} of the DT model M_{DT} of the building using the modelling data D_{M}. The system comprises at least one converter engine 50, being configured to convert the extraction DT data D_{DT_EX} into converted DT data D_{DT_CONV} using the modelling data D_{M} and being configured to convert the extraction BIM data D_{BIM_EX} into converted BIM data D_{BIM_CONV} using the modelling data D_{M}. The system comprises a BIM compositor 20, being configured to populate the converted DT data D_{DT_CONV} into a converted BIM instance I_{BIM_CONV} using the modelling data D_{M}. The system comprises a DT compositor 40, being configured to populate the converted BIM data D_{BIM_CONV} into a converted DT instance I_{DT_CONV} using the modelling data D_{M}.

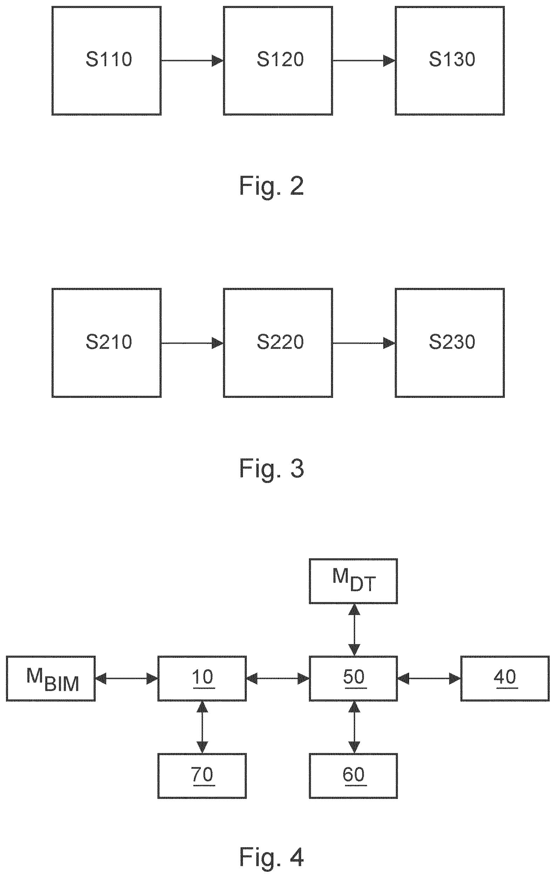

Fig.2 schematically shows a method for building data exchange. A first step S110 comprises determining, by a building information modelling, BIM, extractor 10, extraction BIM data DBIM_EX from a BIM instance IBIM of a BIM model MBIM of the building using modelling data DM of an information modelling unit 60, comprising a description of a digital twin, DT, model MDT, a BIM model MBIM and relations between the DT model MDT and the BIM model MBIM, wherein the information modelling unit 60 is configured to provide modelling data DM comprising information of the DT model MDT, the BIM model MBIM and/or relations between the DT model MDT and the BIM model MBIM. A second step S120 comprises converting, by a converter engine 50, the extraction BIM data DBIM_EX into converted BIM data DBIM_CONV using the modelling data DM. A third step S130 comprises populating, by a DT compositor, the converted BIM data DBIM_CONV into a converted DT instance IDT_CONV using the modelling data DM.

Fig. 3 schematically shows another method for building data exchange. A fourth step S210 comprises determining, by a digital twin, DT, extractor 30, extraction DT data DDT_EX from a DT instance IDT of a DT model MDT of the building using the modelling data DM of an information modelling unit 60, comprising a description of the DT model, a BIM, building information modelling, model MBIM and relations between the DT model MDT and the BIM model MBIM, wherein the information modelling unit 60 is configured to provide modelling data DM comprising information of the DT model MDT, the BIM model MBIM and/or relations between the DT model MDT and the BIM model MBIM. A fifth step S220 comprises converting, by a converter engine 50, the extraction DT data DDT_EX into converted DT data DDT_CONV using the modelling data DM. A sixth step S230 comprises populating, by a BIM compositor 20, the converted DT data DDT_CONV into a converted BIM instance IBIM_CONV using the modelling data DM.

Fig. 4 schematically shows another system for building data exchange. The system provides this exemplary workflow. The user starts the workflow by browsing or searching for a DT instance I_{DT} in the DT model M_{DT}. After a particular DT instance I_{DT} has been selected, the corresponding BIM information can be imported utilizing the converter engine 50. Here, the converter engine 50 utilizes modelling data D_{M} that is included in information modelling unit 60 and invokes one or more BIM extractors 10 to extract extraction BIM data D_{BIM_EX} from BIM instances I_{BIM} utilizing the modelling data D_{M}. If certain information is missing in the BIM instance I_{BIM} then a NLP unit 70 is invoked by the converter engine 50 to extract additional data from other relevant fields such as, sometimes, name contains information such as location and device type. The converter engine 50 converts the extraction BIM data D_{BIM_EX} into converted DT data D_{DT_CONV}. The retrieved additional information is used together with the converted DT data D_{DT_CONV} by a DT compositor 40. The DT compositor 40 reads DT data from a DT instance I_{DT} corresponding to the BIM instance I_{BIM} and populates the converted DT data D_{DT_CONV} and the additional data into the selected DT instance I_{DT}. Afterwards, the selected DT instance I_{DT} containing BIM data in form of the converted DT data D_{DT_CONV} is updated.

## Claims

1. A computer-implemented system for building data exchange, comprising:
an information modelling unit (60), comprising a description of a digital twin, DT, model (M_{DT}), a BIM, building information modelling, model (M_{BIM}) and relations between the DT model (M_{DT}) and the BIM model (M_{BIM}), wherein the information modelling unit (60) is configured to provide modelling data (D_{M}) comprising information of the DT model (M_{DT}), the BIM model (M_{SIM}) and/or relations between the DT model (M_{DT}) and the BIM model (M_{BIM});
a BIM extractor (10), being configured to determine extraction BIM data (D_{BIM_EX}) from a BIM instance (I_{SIM}) of the BIM model (M_{BIM}) of the building using the modelling data (D_{M});
a DT extractor (30), being configured to determine extraction DT data (D_{DT_EX}) from a DT instance (I_{DT}) of the DT model (M_{DT}) of the building using the modelling data (D_{M});
a natural language processing, NLP, unit (70), comprising a machine learning model that is trained on a model database to detect, contextualize and categorize entity names and/or values;
wherein the NLP unit (70) is configured to extract additional BIM data from the BIM model (M_{BIM}) and/or additional DT data from the DT model (M_{DT});
at least one converter engine (50), being configured to convert the extraction DT data (D_{DT_EX}) and the additional DT data into converted DT data (D_{DT_CONV}) using the modelling data (D_{M}) and being configured to convert the extraction BIM data (D_{BIM_EX}) and the additional BIM data into converted BIM data (D_{BIM_CONV}) using the modelling data (D_{M}).
a BIM compositor (20), being configured to populate the converted DT data (D_{DT_CONV}) into a converted BIM instance (I_{BIM_CONV}) using the modelling data (D_{M}); and
a DT compositor (40), being configured to populate the converted BIM data (D_{BIM_CONV}) into a converted DT instance (I_{DT_CONV}) using the modelling data (D_{M}).

2. System of any of the preceding claims,
wherein the converter engine (50) is configured to model the relations between the DT model (M_{DT}) and the BIM model (M_{BIM}) using the modelling data (D_{M}), wherein modelling the relations between the DT model (M_{DT}) and the BIM model (M_{BIM}) comprise analysing the DT model (M_{DT}) and the BIM model (M_{BIM}) and thereby determining a conversion method for converting at least part of the DT model (M_{DT}) into the BIM model (M_{BIM}) and vice versa.

3. System of any of the preceding claims,
wherein analysing the DT model (M_{DT}) and the BIM model (M_{BIM}) comprises restructuring data of one of the DT model (M_{DT}) and the BIM model (M_{BIM}).

4. System of claim 3,
wherein determining the conversion method comprises selecting a predetermined standard conversion method.

5. System of claim 3,
wherein determining the conversion method comprises generating a modelling logic estimating a conversion between the DT model (M_{DT}) and the BIM model (M_{BIM}).

6. System of any of the preceding claims,
wherein the information modelling unit (60) uses a unified modelling language, UML, XML schemes, meta-models and/or ontologies to describes the DT, model, the BIM model, and/or the relations between the DT model (M_{DT}) and the BIM model (M_{BIM}).

7. System of any of the preceding claims,
wherein the at least one converter engine (50) is configured to identify errors in the provided extraction DT data (D_{DT_EX}) and/or the provided extraction BIM data (D_{BIM_EX}).

8. System of claim 7,
wherein the identified error comprises wrong data or missing data in the provided extraction DT data (D_{DT_EX}) and/or the provided extraction BIM data (D_{BIM_EX}).

9. System of any of the claims 7 or 8, comprising,
wherein the at least one converter engine (50) is configured to provide a suggestion to the identified error in the provided extraction DT data (D_{DT_EX}) and/or the provided extraction BIM data (D_{BIM_EX}) using a knowledge database.

10. System of any of the claims 8 or 9,
wherein the provided extraction DT data (D_{DT_EX}) and/or the provided extraction BIM data (D_{BIM_EX}) comprise a plurality of different data fields;
wherein the NLP unit (70) is configured to provide the suggestion to the identified error in a data field using data from another data field.

11. System of any of claims 8-10, comprising,
wherein the NLP unit (70) is configured to, when the converter engine identifies an error in the provided extraction DT data (D_{DT_EX}) and/or the provided extraction BIM data (D_{BIM_EX}), guide a user to correct the identified error.

12. System of any of the claims 8-11,
wherein the NLP unit (70) is configured to provide a visualization of the identified error for the user.

13. A computer-implemented method for building data exchange, comprising the steps:
determining, by a building information modelling, BIM, extractor (10), extraction BIM data (D_{BIM_EX}) from a BIM instance (I_{BIM}) of a BIM model (M_{BIM}) of the building using modelling data (D_{M}) of an information modelling unit (60), comprising a description of a digital twin, DT, model (M_{DT}), a BIM model (M_{BIM}) and relations between the DT model (M_{DT}) and the BIM model (M_{BIM}), wherein the information modelling unit (60) is configured to provide modelling data (D_{M}) comprising information of the DT model (M_{DT}), the BIM model (M_{BIM}) and/or relations between the DT model (M_{DT}) and the BIM model (M_{BIM});
extracting, by a natural language processing unit (70) comprising a machine learning model that is trained on a model database to detect, contextualize and categorize entity names and/or values, additional BIM data from the BIM model (M_{BIM});
converting, by a converter engine (50), the extraction BIM data (D_{BIM_EX}) and the additional BIM data into converted BIM data (D_{BIM_CONV}) using the modelling data (D_{M});
populating, by a DT compositor, the converted BIM data (D_{BIM_CONV}) into a converted DT instance (I_{DT_CONV}) using the modelling data (D_{M}).

14. A computer-implemented method for building data exchange, comprising the steps:
determining, by a digital twin, DT, extractor (30), extraction DT data (D_{DT_EX}) from a DT instance (I_{DT}) of a DT model (M_{DT}) of the building using the modelling data (D_{M}) of an information modelling unit (60), comprising a description of the DT model, a BIM, building information modelling, model (M_{BIM}) and relations between the DT model (M_{DT}) and the BIM model (M_{BIM}), wherein the information modelling unit (60) is configured to provide modelling data (D_{M}) comprising information of the DT model (M_{DT}), the BIM model (M_{BIM}) and/or relations between the DT model (M_{DT}) and the BIM model (M_{BIM});
extracting, by a natural language processing unit (70) comprising a machine learning model that is trained on a model database to detect, contextualize and categorize entity names and/or values, additional DT data from the DT model (M_{DT});
converting, by a converter engine (50), the extraction DT data (D_{DT_EX}) and the additional DT data into converted DT data (D_{DT_CONV}) using the modelling data (D_{M});
populating, by a BIM compositor (20), the converted DT data (D_{DT_CONV}) into a converted BIM instance (I_{BIM_CONV}) using the modelling data (D_{M}).

## Patentansprüche

1. Ein computerimplementiertes System für Gebäudedatenaustausch, umfassend:
eine Informationsmodellierungseinheit (60), umfassend eine Beschreibung eines Digital-Twin-, DT-, Modells (M_{DT}), eines BIM-, Gebäudeinformationsmodellierungs-, Modells (M_{BIM}) und Beziehungen zwischen dem DT-Modell (M_{DT}) und dem BIM-Modell (M_{BIM}), wobei die Informationsmodellierungseinheit (60) dazu eingerichtet ist, Modellierungsdaten (D_{M}) bereitzustellen, die Informationen des DT-Modells (M_{DT}), des BIM-Modells (M_{BIM}) und/oder Beziehungen zwischen dem DT-Modell (M_{DT}) und dem BIM-Modell (M_{BIM}) umfassen;
einen BIM-Extraktor (10), der dazu eingerichtet ist, Extraktions-BIM-Daten (D_{BIM_EX}) aus einer BIM-Instanz (I_{BIM}) des BIM-Modells (M_{BIM}) des Gebäudes unter Verwendung der Modellierungsdaten (D_{M}) zu bestimmen;
einen DT-Extraktor (30), der dazu eingerichtet ist, Extraktions-DT-Daten (D_{DT_EX}) aus einer DT-Instanz (I_{DT}) des DT-Modells (M_{DT}) des Gebäudes unter Verwendung der Modellierungsdaten (D_{M}) zu bestimmen;
eine Einheit (70) zur Verarbeitung natürlicher Sprache, NLP, umfassend ein Machine-Learning-Modell, das auf einer Modelldatenbank trainiert ist, um Entitätsnamen und/oder Werte zu detektieren, zu kontextualisieren und zu kategorisieren;
wobei die NLP-Einheit (70) dazu eingerichtet ist, zusätzliche BIM-Daten aus dem BIM-Modell (M_{BIM}) und/oder zusätzliche DT-Daten aus dem DT-Modell (M_{DT}) zu extrahieren;
mindestens eine Konverter-Engine (50), die dazu eingerichtet ist, die Extraktions-DT-Daten (D_{DT_EX}) und die zusätzlichen DT-Daten unter Verwendung der Modellierungsdaten (D_{M}) in konvertierte DT-Daten (D_{DT_CONV}) zu konvertieren und dazu eingerichtet ist, die Extraktions-BIM-Daten (D_{BIM_EX}) und die zusätzlichen BIM-Daten unter Verwendung der Modellierungsdaten (D_{M}) in konvertierte BIM-Daten (D_{BIM_CONV}) zu konvertieren,
einen BIM-Kompositor (20), der dazu eingerichtet ist, die konvertierten DT-Daten (D_{DT_CONV}) unter Verwendung der Modellierungsdaten (D_{M}) in eine konvertierte BIM-Instanz (I_{BIM_CONV}) zu befüllen; und
einen DT-Kompositor (40), der dazu eingerichtet ist, die konvertierten BIM-Daten (D_{BIM_CONV}) unter Verwendung der Modellierungsdaten (D_{M}) in eine konvertierte DT-Instanz (I_{DT_CONV}) zu befüllen.

2. System nach einem der vorhergehenden Ansprüche,
wobei die Konverter-Engine (50) dazu eingerichtet ist, die Beziehungen zwischen dem DT-Modell (M_{DT}) und dem BIM-Modell (M_{BIM}) unter Verwendung der Modellierungsdaten (D_{M}) zu modellieren, wobei das Modellieren der Beziehungen zwischen dem DT-Modell (M_{DT}) und dem BIM-Modell (M_{BIM}) das Analysieren des DT-Modells (M_{DT}) und des BIM-Modells (M_{BIM}) umfasst und dadurch ein Konvertierungsverfahren zum Konvertieren wenigstens eines Teils des DT-Modells (M_{DT}) in das BIM-Modell (M_{BIM}) und vice versa bestimmt.

3. System nach einem der vorhergehenden Ansprüche,
wobei das Analysieren des DT-Modells (M_{DT}) und des BIM-Modells (M_{BIM}) das Umstrukturieren von Daten eines des DT-Modells (M_{DT}) und des BIM-Modells (M_{BIM}) umfasst.

4. System nach Anspruch 3,
wobei das Bestimmen des Konvertierungsverfahrens das Auswählen eines vorbestimmten Standard-Konvertierungsverfahrens umfasst.

5. System nach Anspruch 3,
wobei das Bestimmen des Konvertierungsverfahrens das Erzeugen einer Modellierungslogik umfasst, die eine Konvertierung zwischen dem DT-Modell (M_{DT}) und dem BIM-Modell (M_{BIM}) abschätzt.

6. System nach einem der vorhergehenden Ansprüche,
wobei die Informationsmodellierungseinheit (60) eine Unified Modelling Language, UML, XML-Schemata, Metamodelle und/oder Ontologien verwendet, um das DT-Modell, das BIM-Modell und/oder die Beziehungen zwischen dem DT-Modell (M_{DT}) und dem BIM-Modell (M_{BIM}) zu beschreiben.

7. System nach einem der vorhergehenden Ansprüche,
wobei die mindestens eine Konverter-Engine (50) dazu eingerichtet ist, Fehler in den bereitgestellten Extraktions-DT-Daten (D_{DT_EX}) und/oder den bereitgestellten Extraktions-BIM-Daten (D_{BIM_EX}) zu identifizieren.

8. System nach Anspruch 7,
wobei der identifizierte Fehler falsche Daten oder fehlende Daten in den bereitgestellten Extraktions-DT-Daten (D_{DT_EX}) und/oder den bereitgestellten Extraktions-BIM-Daten (D_{BIM_EX}) umfasst.

9. System nach einem der Ansprüche 7 oder 8, umfassend,
wobei die mindestens eine Konverter-Engine (50) dazu eingerichtet ist, einen Vorschlag zu dem identifizierten Fehler in den bereitgestellten Extraktions-DT-Daten (D_{DT_EX}) und/oder den bereitgestellten Extraktions-BIM-Daten (D_{BIM_EX}) unter Verwendung einer Wissensdatenbank bereitzustellen.

10. System nach einem der Ansprüche 8 oder 9,
wobei die bereitgestellten Extraktions-DT-Daten (D_{DT_EX}) und/oder die bereitgestellten Extraktions-BIM-Daten (D_{BIM_EX}) eine Vielzahl unterschiedlicher Datenfelder umfassen;
wobei die NLP-Einheit (70) dazu eingerichtet ist, den Vorschlag zu dem identifizierten Fehler in einem Datenfeld unter Verwendung von Daten aus einem anderen Datenfeld bereitzustellen.

11. System nach einem der Ansprüche 8-10, umfassend,
wobei die NLP-Einheit (70) dazu eingerichtet ist, wenn die Konverter-Engine einen Fehler in den bereitgestellten Extraktions-DT-Daten (D_{DT_EX}) und/oder den bereitgestellten Extraktions-BIM-Daten (D_{BIM_EX}) identifiziert, einen Benutzer anzuleiten, den identifizierten Fehler zu korrigieren.

12. System nach einem der Ansprüche 8-11,
wobei die NLP-Einheit (70) dazu eingerichtet ist, eine Visualisierung des identifizierten Fehlers für den Benutzer bereitzustellen.

13. Ein computerimplementiertes Verfahren für Gebäudedatenaustausch, umfassend die Schritte:
Bestimmen, durch einen Gebäudeinformationsmodellierungs-, BIM-, Extraktor (10), von Extraktions-BIM-Daten (D_{BIM_EX}) aus einer BIM-Instanz (I_{BIM}) eines BIM-Modells (M_{BIM}) des Gebäudes unter Verwendung von Modellierungsdaten (D_{M}) einer Informationsmodellierungseinheit (60), umfassend eine Beschreibung eines Digital-Twin-, DT-, Modells (M_{DT}), eines BIM-Modells (M_{BIM}) und Beziehungen zwischen dem DT-Modell (M_{DT}) und dem BIM-Modell (M_{BIM}), wobei die Informationsmodellierungseinheit (60) dazu eingerichtet ist, Modellierungsdaten (D_{M}) bereitzustellen, die Informationen des DT-Modells (M_{DT}), des BIM-Modells (M_{BIM}) und/oder Beziehungen zwischen dem DT-Modell (M_{DT}) und dem BIM-Modell (M_{BIM}) umfassen;
Extrahieren, durch eine Einheit (70) zur Verarbeitung natürlicher Sprache, die ein Machine-Learning-Modell umfasst, das auf einer Modelldatenbank trainiert ist, um Entitätsnamen und/oder Werte zu detektieren, zu kontextualisieren und zu kategorisieren, von zusätzlichen BIM-Daten aus dem BIM-Modell (M_{BIM}); Konvertieren, durch eine Konverter-Engine (50), der Extraktions-BIM-Daten (D_{BIM_EX}) und der zusätzlichen BIM-Daten in konvertierte BIM-Daten (D_{BIM_CONV}) unter Verwendung der Modellierungsdaten (D_{M});
Befüllen, durch einen DT-Kompositor, der konvertierten BIM-Daten (D_{BIM_CONV}) in eine konvertierte DT-Instanz (I_{DT_CONV}) unter Verwendung der Modellierungsdaten (D_{M}).

14. Ein computerimplementiertes Verfahren für Gebäudedatenaustausch, umfassend die Schritte:
Bestimmen, durch einen Digital-Twin-, DT-, Extraktor (30), von Extraktions-DT-Daten (D_{DT_EX}) aus einer DT-Instanz (I_{DT}) eines DT-Modells (M_{DT}) des Gebäudes unter Verwendung der Modellierungsdaten (D_{M}) einer Informationsmodellierungseinheit (60), umfassend eine Beschreibung des DT-Modells, eines BIM-, Gebäudeinformationsmodellierungs-, Modells (M_{BIM}) und Beziehungen zwischen dem DT-Modell (M_{DT}) und dem BIM-Modell (M_{BIM}), wobei die Informationsmodellierungseinheit (60) dazu eingerichtet ist, Modellierungsdaten (D_{M}) bereitzustellen, die Informationen des DT-Modells (M_{DT}), des BIM-Modells (M_{BIM}) und/oder Beziehungen zwischen dem DT-Modell (M_{DT}) und dem BIM-Modell (M_{BIM}) umfassen;
Extrahieren, durch eine Einheit (70) zur Verarbeitung natürlicher Sprache, die ein Machine-Learning-Modell umfasst, das auf einer Modelldatenbank trainiert ist, um Entitätsnamen und/oder Werte zu detektieren, zu kontextualisieren und zu kategorisieren, von zusätzlichen DT-Daten aus dem DT-Modell (M_{DT}); Konvertieren, durch eine Konverter-Engine (50), der Extraktions-DT-Daten (D_{DT_EX}) und der zusätzlichen DT-Daten in konvertierte DT-Daten (D_{DT_CONV}) unter Verwendung der Modellierungsdaten (D_{M});
Befüllen, durch einen BIM-Kompositor (20), der konvertierten DT-Daten (D_{DT_CONV}) in eine konvertierte BIM-Instanz (I_{BIM_CONV}) unter Verwendung der Modellierungsdaten (D_{M}).

## Revendications

1. Système, mis en œuvre par ordinateur, d'échange de données de bâtiment, comprenant :
une unité (60) de modélisation d'informations, comprenant une description d'un modèle de jumeau numérique, DT, (M_{DT}), un modèle (M_{BIM}) de modélisation d'informations de bâtiment, BIM, et des relations entre le modèle DT (M_{DT}) et le modèle BIM (M_{BIM}), l'unité (60) de modélisation d'informations étant configurée pour fournir des données de modélisation (D_{M}) comprenant des informations du modèle DT (M_{DT}), du modèle BIM (M_{BIM}) et/ou des relations entre le modèle DT (M_{DT}) et le modèle BIM (M_{BIM}) ;
un extracteur (10) de BIM, qui est configuré pour déterminer des données BIM d'extraction (D_{BIM_EX}) à partir d'une instance BIM (I_{BIM}) du modèle BIM (M_{BIM}) du bâtiment en utilisant les données de modélisation (D_{M}) ;
un extracteur (30) de DT, qui est configuré pour déterminer des données DT d'extraction (D_{DT_EX}) à partir d'une instance DT (I_{DT}) du modèle DT (M_{DT}) du bâtiment en utilisant les données de modélisation (D_{M}) ;
une unité (70) de traitement de langage naturel, NLP, comprenant un modèle d'apprentissage automatique entraîné sur une base de données de modèle pour détecter, contextualiser et catégoriser des noms d'entités et/ou des valeurs ;
l'unité (70) de NLP étant configurée pour extraire des données BIM supplémentaires du modèle BIM (M_{BIM}) et/ou des données DT supplémentaires du modèle DT (M_{DT}) ;
au moins un moteur (50) de conversion, configuré pour convertir les données DT d'extraction (D_{DT_EX}) et les données DT supplémentaires en données DT converties (D_{DT_CONV}) à l'aide des données de modélisation (D_{M}), et configuré pour convertir les données BIM d'extraction (D_{BIM_EX}) et les données BIM supplémentaires en données BIM converties (D_{BIM_CONV}) à l'aide des données de modélisation (D_{M}).
un compositeur BIM (20), configuré pour renseigner les données DT converties (D_{DT_CONV}) dans une instance BIM convertie (I_{BIM_CONV}) à l'aide des données de modélisation (D_{M}) ; et
un compositeur DT (40), configuré pour renseigner les données BIM converties (D_{BIM_CONV}) dans une instance DT convertie (I_{DT_CONV}) à l'aide des données de modélisation (D_{M}).

2. Système selon l'une quelconque des revendications précédentes,
le moteur (50) de conversion étant configuré pour modéliser les relations entre le modèle DT (M_{DT}) et le modèle BIM (M_{BIM}) en utilisant les données de modélisation (D_{M}), la modélisation des relations entre le modèle DT (M_{DT}) et le modèle BIM (M_{BIM}) comprenant l'analyse du modèle DT (M_{DT}) et du modèle BIM (M_{BIM}) et ainsi la détermination d'un procédé de conversion pour convertir au moins une partie du modèle DT (M_{DT}) en modèle BIM (M_{BIM}) et vice versa.

3. Système selon l'une quelconque des revendications précédentes,
l'analyse du modèle DT (M_{DT}) et du modèle BIM (M_{BIM}) comprenant la restructuration de données d'un modèle parmi le modèle DT (M_{DT}) et le modèle BIM (M_{BIM}).

4. Système selon la revendication 3,
la détermination du procédé de conversion comprenant la sélection d'un procédé de conversion standard prédéterminé.

5. Système selon la revendication 3,
la détermination du procédé de conversion comprenant la génération d'une logique de modélisation estimant une conversion entre le modèle DT (M_{DT}) et le modèle BIM (M_{BIM}).

6. Système selon l'une quelconque des revendications précédentes,
l'unité (60) de modélisation d'informations utilisant un langage de modélisation unifié, UML, des schémas XML, des méta-modèles et/ou des ontologies pour décrire le modèle DT, le modèle BIM et/ou les relations entre le modèle DT (M_{DT}) et le modèle BIM (M_{BIM}).

7. Système selon l'une quelconque des revendications précédentes,
le ou les moteurs (50) de conversion étant configurés pour identifier des erreurs dans les données DT d'extraction (D_{DT_EX}) fournies et/ou les données BIM d'extraction (D_{BIM_EX}) fournies.

8. Système selon la revendication 7,
l'erreur identifiée comprenant des données erronées ou des données manquantes dans les données DT d'extraction (D_{DT_EX}) fournies et/ou les données BIM d'extraction (D_{BIM_EX}) fournies.

9. Système selon l'une quelconque des revendications 7 ou 8, comprenant :
le ou les moteurs (50) de conversion étant configurés pour fournir une suggestion à l'erreur identifiée dans les données DT d'extraction (D_{DT_EX}) fournies et/ou les données BIM d'extraction (D_{BIM_EX}) fournies à l'aide d'une base de données de connaissances.

10. Système selon l'une quelconque des revendications 8 ou 9,
les données DT d'extraction (D_{DT_EX}) fournies et/ou les données BIM d'extraction (D_{BIM_EX}) fournies comprenant une pluralité de champs de données différents ;
l'unité (70) de NLP étant configurée pour fournir la suggestion à l'erreur identifiée dans un champ de données en utilisant des données provenant d'un autre champ de données.

11. Système selon l'une quelconque des revendications 8 à 10, comprenant :
l'unité (70) de NLP étant configurée pour, lorsque le moteur de conversion identifie une erreur dans les données DT d'extraction (D_{DT_EX}) fournies et/ou les données BIM d'extraction (D_{BIM_EX}) fournies, guider un utilisateur pour corriger l'erreur identifiée.

12. Système selon l'une quelconque des revendications 8 à 11,
l'unité (70) de NLP étant configurée pour fournir une visualisation de l'erreur identifiée à l'utilisateur.

13. Procédé, mis en œuvre par ordinateur, d'échange de données de bâtiment, comprenant les étapes de :
détermination, par un extracteur (10) de modélisation d'informations de bâtiment, BIM, de données BIM d'extraction (D_{BIM_EX}) à partir d'une instance BIM (I_{BIM}) d'un modèle BIM (M_{BIM}) du bâtiment à l'aide de données de modélisation (D_{M}) d'une unité (60) de modélisation d'informations _{DT}, comprenant une description d'un modèle de jumeau numérique, DT, (M_{DT}), d'un modèle BIM (M_{BIM}) et de relations entre le modèle DT (M_{DT}) et le modèle BIM (_{BIM}), l'unité (60) de modélisation d'informations étant configurée pour fournir des données de modélisation (D_{M}) comprenant des informations du modèle DT (M_{DT}), du modèle BIM (M_{BIM}) et/ou des relations entre le modèle DT (M_{DT}) et le modèle BIM (M_{BIM}) ;
extraction, par une unité (70) de traitement de langage naturel comprenant un modèle d'apprentissage automatique entrainé sur une base de données de modèle pour détecter, contextualiser et catégoriser des noms d'entités et/ou des valeurs, des données BIM supplémentaires à partir du modèle BIM (M_{BIM}) ;
conversion, par un moteur (50) de conversion, des données BIM d'extraction (D_{BIM_EX}) et les données BIM supplémentaires en données BIM converties (D_{BIM_CONV}) à l'aide des données de modélisation (D_{M}) ;
renseignement, par un compositeur DT, des données BIM converties (D_{BIM_CONV}) dans une instance DT convertie (I_{DT_CONV}) à l'aide des données de modélisation (D_{M}).

14. Procédé, mis en œuvre par ordinateur, d'échange de données de bâtiment, comprenant les étapes de :
détermination, par un extracteur (30) de jumeau numérique, DT, de données DT d'extraction (D_{DT_EX}) à partir d'une instance DT (I_{DT}) d'un modèle DT (M_{DT}) du bâtiment à l'aide des données de modélisation (D_{M}) d'une unité (60) de modélisation d'informations, comprenant une description du modèle DT, un modèle de modélisation d'informations de bâtiment, BIM, (M_{BIM}) et des relations entre le modèle DT (M_{DT}) et le modèle BIM (M_{BIM}), l'unité (60) de modélisation d'informations étant configurée pour fournir des données de modélisation (D_{M}) comprenant des informations du modèle DT (M_{DT}), du modèle BIM (M_{BIM}) et/ou des relations entre le modèle DT (M_{DT}) et le modèle BIM (M_{BIM}) ;
extraction, par une unité (70) de traitement de langage naturel comprenant un modèle d'apprentissage automatique entraîné sur une base de données de modèle pour détecter, contextualiser et catégoriser des noms d'entités et/ou des valeurs, de données DT supplémentaires à partir du modèle DT (M_{DT}) ;
conversion, par un moteur (50) de conversion, des données DT d'extraction (D_{DT_EX}) et des données DT supplémentaires en données DT converties (D_{DT_CONV}) à l'aide des données de modélisation (D_{M}) ;
renseignement, par un compositeur BIM (20), des données DT converties (D_{DT_CONV}) dans une instance BIM convertie (I_{BIM_CONV}) à l'aide des données de modélisation (D_{M}).
